# EUROPÄISCHE PATENTSCHRIFT

(11) **EP 3 076 075 B1**
(45) Veröffentlichungstag und Bekanntmachung des Hinweises auf die Patenterteilung: **09.05.2018**
(21) Anmeldenummer: 16162841.7
(22) Anmeldetag: 30.03.2016
(51) Int. Cl.: F23D 14/56, B23K 7/06

(54) **FLÄMMKOPF UND FLÄMMVERFAHREN**
SCARFING HEAD AND SCARFING METHOD
TETE DE CHALUMEAU ET PROCÉDÉ DE DÉCRIQUAGE AU CHALUMEAU

(30) Priorität: 02.04.2015 DE 102015105144
(43) Veröffentlichungstag der Anmeldung: 05.10.2016
(73) Patentinhaber: Gefam GmbH, 61462 Königstein im Taunus (DE)
(72) Erfinder: Lotz, Horst Karl, 61462 Königstein im Taunus (DE)
(74) Vertreter: Dennemeyer & Associates S.A.

(56) Entgegenhaltungen:
- EP-A1- 0 495 144
- DE-A1- 1 629 960
- US-A- 2 483 479

## Beschreibung

### Gebiet der Erfindung

Die Erfindung betrifft einen Flämmkopf zum Flämmen einer Oberfläche eines durch Gießen hergestellten Werkstücks, insbesondere einer Bramme, sowie ein entsprechendes Verfahren.

Flämmköpfe werden in Flämmgeräten verwendet, die entweder als Automaten oder als Handflämmgeräte ausgebildet sind. Flämmarbeiten sind insbesondere zum Glätten und Putzen von Brammenoberflächen notwendig. Beim Abkühlen der durch Gießen hergestellten Brammen bilden sich an deren Oberfläche häufig unerwünschte Risse, die durch eine Oberflächenbehandlung, nämlich das Flämmen, entfernt werden. Dies gilt auch für Grate oder Bärte, die beim Bearbeiten der Brammen, z.B. durch Brennschneiden, entstehen. Beim Flämmen wird die Oberfläche der Bramme erhitzt und, wenn die Zündtemperatur des Stahls erreicht ist, ein Sauerstoffstrom (sog. Flämmsauerstoff) aufgeblasen. Das Material an der Oberfläche der Bramme brennt dadurch ab und hinterlässt die gewünschte glatte Oberfläche. Die verwendeten Flämmbrenner werden zur Beseitigung der Oberflächenfehler entlang der betroffenen Flächen geführt.

### Stand der Technik

Es sind Gasbrenner für Flämmarbeiten bekannt, die mehrere koaxial zueinander angeordnete Rohre für eine Sauerstoffzufuhr aufweisen, die von mehreren ringsum angeordneten Rohren für eine Brenngaszufuhr umgeben sind.

So offenbart die DE 20 2006 008 760 U1 eine Gasbrennerdüse für Flämmarbeiten mit einer zentralen, aus mehreren Rohren bestehenden Sauerstoffzufuhr und mit mehreren rings um die genannte Sauerstoffzufuhr angeordneten Rohren für die Brenngaszufuhr. Dabei sind die Rohre für die Sauerstoffzufuhr jeweils gruppenweise angeordnet, wobei die einzelnen Gruppen koaxial und zueinander beabstandet angeordnet sind und jede Gruppe aus mindestens zwei ringförmig angeordneten Reihen von Rohren besteht. Weiterhin ist die Gasbrennerdüse gekennzeichnet durch drei Gruppen von Rohren zur Sauerstoffzufuhr.

Ein wesentlicher Nachteil dieser Gasbrennerdüse ist, dass die Sauerstoffzufuhr über Rohre erfolgt, die zu Gruppen zusammengefasst sind. Das Einbringen der Vielzahl von Rohren in den Gasbrennerdüsenkörper ist extrem aufwändig sowie material- und kostenintensiv. Demgemäß müssen alle Rohre einzeln in den Düsenkörper eingelötet werden. Dadurch ist die Fertigung dieser Gasbrennerdüse sehr teuer. Weiterhin ist nachteilig, dass die Gruppen von Rohren jeweils aus mindestens zwei oder gar drei ringförmig angeordneten Reihen von Rohren bestehen.

Aus der WO 99/61192 A1 ist ein ähnlicher Flämmbrenner bekannt, der allerdings noch komplizierter und aufwändiger aufgebaut ist.

Der in der WO 2011/154043 A1 offenbarte Flämmkopf ist insbesondere kostengünstiger herzustellen und erzeugt eine besser geformte Flamme, die einerseits den Sauerstoffverbrauch reduzieren und andererseits den Flämmbereich erweitern soll.

Die Druckschrift DE 16 29 960 A1 zeigt einen Flämmbrenner mit einem langgezogenen rechteckigen Kopfteil mit einem Lippenpaar, geeignet für das Flämmen großer Flächen in einem Zug mit einem Automaten. Um verschieden große Anlagen zu realisieren, können mehrere derartige Flämmköpfe baukastenartig zu einer größeren Flämmeinheit zusammengesetzt werden.

Die genannten Flämmköpfe haben alle den Nachteil, dass der Flämmstart mit erheblichem Aufwand verbunden ist. Entweder muss die Werkstückoberfläche vor dem Beginn des eigentlichen Flämmens mit dem Flämmbrenner bis zur Zündtemperatur aufgeheizt werden, was einen erheblichen Zeitaufwand erfordert. Oder der Flämmstart wird mit Eisenpulver herbeigeführt, was eine komplexere Apparatur, die ein zusätzliches Verbrauchsmaterial benötigt, sowie erhöhte Verschmutzung durch umherspritzende Schlacke zur Folge hat. Zudem ist die Wartung bzw. Reinigung des Flämmkopfes, welche aufgrund zurückspritzender Schlacke (insbesondere beim Flämmstart) regelmäßig erfolgen muss, stets mit einem hohen Aufwand verbunden.

### Aufgabe

Aufgabe der Erfindung ist es, einen Flämmkopf und ein Verfahren anzugeben, welche die aus dem Stand der Technik bekannten Nachteile vermeiden oder zumindest minimieren.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Vorgeschlagen wird ein Flämmkopf zum Flämmen einer Oberfläche eines durch Gießen hergestellten Werkstücks, insbesondere einer Bramme, mit einer Gas-Austrittsseite mit einer Brennerplatte, wobei sich an der Gas-Austrittsseite eine Flamme zum Flämmen bilden kann; mit einer Mehrzahl von Schneiddüsen, die an der Brennerplatte einzeln lösbar fixiert sind; und mit einer zentralen Gas-Führung im Flämmkopf; wobei die Mehrzahl von Schneiddüsen um die zentrale Gas-Führung herum angeordnet sind; wobei der Flämmkopf derart ausgebildet ist, dass durch die Mehrzahl von Schneiddüsen Heizgas und optional Heizsauerstoff austreten können; und wobei der Flämmkopf ferner derart ausgebildet ist, dass durch die zentrale Gas-Führung Flämm-Sauerstoff austreten kann.

Als Heizgase können hierbei z.B. Erdgas (Methan), aber auch andere geeignete Kohlenwasserstoffe (z.B. Propan oder Butan) verwendet werden. Die Schneiddüsen werden typischerweise durch eine Schraubverbindung fixiert, es sind allerdings auch beliebige andere fixierende Verbindungen denkbar, so z.B. eine Bajonettverbindung. Die Schneiddüsen können entweder für eine interne oder für eine externe Mischung der Heizgase und des Heizsauerstoffs konfiguriert sein. Bei einer internen Mischung werden Heizgase und Heizsauerstoff bereits im Inneren der Schneiddüse miteinander vermischt, bei einer externen Mischung erfolgt diese erst, nachdem die Gase aus getrennten Bohrungen im Düsenkörper ausgetreten sind.

Ein solcher Flämmkopf erzielt eine besonders hohe Heizleistung auf einer vergleichsweise großen Fläche. Dadurch kann die Oberfläche des Werkstücks schnell auf Zündtemperatur gebracht werden, was den Start des Flämmvorgangs erheblich beschleunigt. Deshalb kann auf die Verwendung von Eisenpulver verzichtet werden. Durch die Verwendung vieler einzeln fixierter Schneiddüsen wird auch die Wartung bzw. Reinigung des Flämmkopfes erheblich erleichtert, da die Schneiddüsen zu diesem Zweck einzeln entfernt und auch ersetzt werden können.

Außerdem erlaubt der Einsatz von Schneiddüsen zum Heizen die doppelte Verwendung von evtl. ohnehin schon vorhandenen Schneiddüsen - mit entsprechenden Kostenvorteilen.

Eine noch bessere Heizleistung, bedingt durch eine bessere Fokussierung der Flammen, wird erreicht, wenn die Schneiddüsen jeweils an ihrer Gas-Austrittsseite eine konkave, topfartige Vertiefung aufweisen, in welche Heizgas und/oder Heizsauerstoff austreten können.

Bei einer Weiterbildung des Flämmkopfes sind die Mehrzahl von Schneiddüsen so angeordnet, dass sie im fixierten Zustand austrittsseitig mit der Brennerplatte des Flämmkopfes fluchten. Dazu sind sie z.B. in entsprechenden Vertiefungen in der Brennerplatte angeordnet.

Bei einer dazu alternativen Weiterbildung sind die Mehrzahl von Schneiddüsen so angeordnet, dass sie im fixierten Zustand austrittsseitig über die Brennerplatte des Flämmkopfes hinausragen. Dies hat den Vorteil, dass sie auch in verschmutztem Zustand (z.B. durch Schlackereste) leicht einzeln entfernt und einer Wartung bzw. Reinigung zugeführt werden können.

Ein Rundflämmkopf, der eine besonders große Fläche flämmen kann, wird dadurch erhalten, dass das die Mehrzahl von Schneiddüsen konzentrisch um die zentrale Gas-Führung herum angeordnet sind. Diese zentrale Bohrung für den Flämmsauerstoff hat typischerweise eintrittsseitig einen Durchmesser von 12-14 mm, bevorzugt 13 mm, und austrittsseitig einen Durchmesser von 13-16 mm, bevorzugt 15 mm, ist also leicht konisch ausgeführt, wobei der Öffnungswinkel bevorzugt 7° beträgt. Mit einem solchen Flämmkopf kann typischerweise eine Fläche mit einem Durchmesser von etwa 200 mm geflämmt werden, wenn der Flämmkopf schräg zur Oberfläche des Werkstücks ausgerichtet wird. Dabei wird ein Winkel von 30° gegenüber der Horizontalen bevorzugt. Die große Fläche reduziert erheblich die Anzahl an Bahnen, die der Flämmkopf beim Flämmen auf der Oberfläche des Werkstücks zurücklegen muss, führt also zu einem schnelleren und weniger komplexen Ablauf.

Einen linearen Flämmkopf, der z.B. geeignet ist, eine Seite einer Bramme in einem Zug zu flämmen, erhält man dadurch, dass die zentrale Gas-Führung als Spalt oder Schlitz ausgebildet ist, und dass die Mehrzahl von Schneiddüsen parallel zur zentralen Gas-Führung und auf beiden Seiten der zentralen Gas-Führung angeordnet sind. Sie bilden so Brennerlippen beiderseits der zentralen Gas-Führung. Dabei können die Schneiddüsen in Bezug auf die zentrale Gas-Führung entweder einander gegenüberliegen, oder auch versetzt angeordnet sein.

Verwendet man eine mit einem solchen Flämmkopf ausgestattete Flämmmaschine im Anschluss an z. B. eine Stranggießanlage, ergibt sich aus der Nutzung der Restwärme der Brammen ein weiterer Vorteil. Diese haben beim Verlassen der Stranggießanlage noch eine Temperatur von ca. 600-800 °C. Im Zusammenspiel mit der großen Heizleistung, die der erfindungsgemäße Flämmkopf erzielt, kann so ein "fliegender" Flämmstart erreicht werden: Die Brammen brauchen zum Anflämmen nicht angehalten zu werden, bis die Zündtemperatur erreicht ist, sondern es genügt, ihre Verfahrgeschwindigkeit auf ca. 60-80 mm/min zu reduzieren. Dies reicht aus, um den vom Flämmkopf aufgeheizten Bereich im Vorbeifahren auf Zündtemperatur zu bringen und den Flämmvorgang zu starten. Ist dies geschehen, kann die Verfahrgeschwindigkeit wieder auf einen für das Flämmen typischen Wert von z.B. 12-15 m/min erhöht werden.

Der genaue Ort des Flämmstarts auf der Oberfläche der Bramme lässt sich festlegen, wenn bei dem soeben beschriebenen linearen Flämmkopf auf der in Flämmrichtung vorderen Seite der zentralen Gas-Führung eine Gruppe von ein bis drei benachbarten Schneiddüsen um 3-7 mm, vorzugsweise 5 mm, von der zentralen Gas-Führung weg verschoben angeordnet ist. An dieser Stelle wird die Brammenoberfläche zuerst geheizt, erreicht also hier zuerst ihre Zündtemperatur, worauf der Flämmvorgang starten kann. Dieser breitet sich von dieser Position nach beiden Seiten aus.

Zur Lösung der Aufgabe wird außerdem ein Verfahren zum Flämmen einer Oberfläche eines durch Gießen hergestellten Werkstücks, insbesondere einer Bramme, vorgeschlagen, wobei ein Flämmkopf, wie er oben beschrieben wurde, eingesetzt wird.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Vorzugsweise werden bei dem Verfahren folgende Schritte durchgeführt: Zuerst wird mit dem Flämmkopf eine Kante des Werkstücks bis zur Zündtemperatur des Materials des Werkstücks aufgeheizt; dann wird nach Erreichen der Zündtemperatur Flämm-Sauerstoff über die zentrale Gas-Führung auf das Werkstück geleitet und Flämmkopf und Werkstück werden in einer Richtung relativ zueinander bewegt.

Bei einer bevorzugten Weiterbildung des Verfahrens wird nach Erreichen eines Endes des Werkstücks während der Relativbewegung die Bewegung in entgegengesetzter Richtung fortgesetzt. Während dieser Bewegung in entgegengesetzter Richtung wird dann kein Heizgas und kein Heizsauerstoff mehr aus dem Flämmkopf auf das Werkstück geleitet, sondern nur noch Flämm-Sauerstoff. Auf diese Weise wird bei dem Zurückfahren des Flämmkopfs eventuell zurückbleibende Rest-Schlacke auf der Oberfläche des Werkstücks abgeblasen. Auf diese Weise wird eine besonders blanke Oberfläche erzielt, auf der ggf. im Werkstück vorhandene Risse besonders gut sichtbar sind, so dass diese ggf. nachbearbeitet werden können.

Die Schneiddüsen weisen mindestens eine Schneid-Sauerstoff-Bohrung auf. Bei einer möglichen Ausführungsform des Verfahrenswird während des Aufheizens des Werkstücks bis zur Zündtemperatur seines Materials kein Sauerstoff durch die mindestens eine Schneid-Sauerstoff-Bohrung der Schneiddüsen auf das Werkstück geleitet. Die Schneiddüsen arbeiten somit als reine Heizeinrichtung.

Bei einer bevorzugten Ausführungsform des Verfahrens wird während des Aufheizens des Werkstücks bis zur Zündtemperatur seines Materials zusätzlich Heizgas und Heizsauerstoff durch die mindestens eine Schneid-Sauerstoff-Bohrung mindestens einer der Schneiddüsen auf das Werkstück geleitet. Dabei wird der Druck insbesondere des Sauerstoffs reduziert, damit lediglich eine Heizflamme und keine Flamme zum Brennschneiden entsteht. Durch diese Maßnahmen wird die Heizleistung noch weiter erhöht, was den Start des Flämmvorgangs weiter beschleunigt.

Diese Ausführungsform des Verfahrens bietet sich insbesondere für die verschobene Gruppe von Schneiddüsen an, falls ein linearer Flämmkopf, wie weiter oben beschrieben, eingesetzt wird. Der Flämmstart kann dadurch zusätzlich beschleunigt und seine Position mit größerer Sicherheit festgelegt werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Aufsicht auf die Gasaustrittsseite eines erfindungsgemäßen Rundflämmkopfes;
- Fig. 2: eine schematische Aufsicht (Ausschnitt) auf die Gasaustrittsseite eines erfindungsgemäßen linearen Flämmkopfes;
- Fig. 3: einen schematischen Querschnitt durch einen erfindungsgemäßen linearen Flämmkopf; und
- Fig. 4: einen Ausschnitt eines schematischen Schnitts durch einen erfindungsgemäßen Flämmkopf.

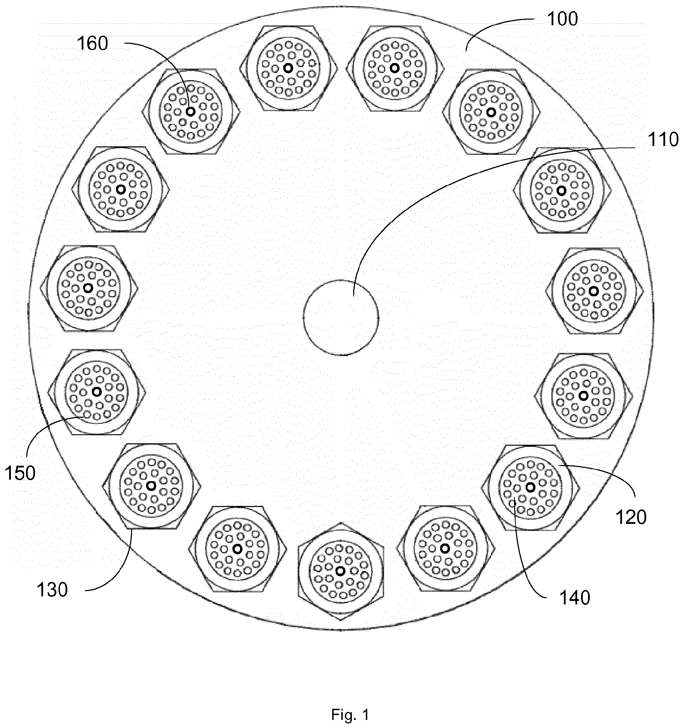

Fig. 1 zeigt eine Aufsicht auf die Gasaustrittsseite eines erfindungsgemäßen Rundflämmkopfes 100. In der Mitte befindet sich die Austrittsöffnung 110 der zentralen Gasführung für den Flämmsauerstoff. In einer typischen Anwendung hat diese einen Durchmesser von ca. 15 mm. Äquidistant darum sind die Schneiddüsen 120 angeordnet, in diesem Beispiel 15 Stück. Diese besitzen an ihrer Außenseite eine Sechskantform 130, um das Ein- und Ausschrauben zu erleichtern. In der Gasaustrittsseite jeder Schneiddüse befindet sich eine topfartige konkave Vertiefung 140, in welcher die Flamme gebildet und fokussiert wird. Dazu sind am Boden dieser Vertiefung jeweils Austrittsöffnungen 150 für Heizgas und Heizsauerstoff vorhanden (hier nicht unterschieden). Diese können auf unterschiedlichste Weise angeordnet sein, typischerweise jedoch in konzentrischen Ringen. Im Zentrum der Schneiddüsen befindet sich jeweils die Austrittsöffnung 160 der Schneidsauerstoffzufuhr. Diese kann im Rahmen dieser Erfindung für eine zusätzliche Zufuhr von Heizgas und -sauerstoff genutzt werden.

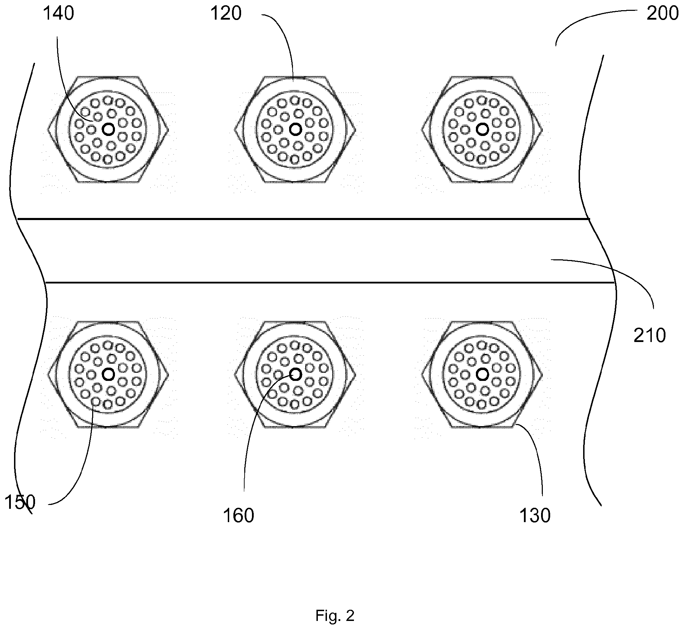

In Fig. 2 ist die Gasaustrittsseite eines linearen Flämmkopfes 200 als Aufsicht dargestellt. Die Länge eines solchen Flämmkopfes wird typischerweise so gewählt, dass die gesamte Breite der zu flämmenden Bramme auf einmal bearbeitet werden kann. Die zentrale Gasführung mündet hier in einen Spalt 210, der über die gesamte Länge des Flämmkopfes geht. Beiderseits dieses Spaltes befinden sich die Schneiddüsen 120, die in diesem Beispiel gegenüberliegend angeordnet sind. Eine versetzte Anordnung ist jedoch genauso denkbar. Diese haben wieder eine Sechskantform 130 und in ihrer jeweiligen Austrittsseite eine topfartige konkave Vertiefung 140 mit Austrittsöffnungen 150 für Heizgas und Heizsauerstoff sowie eine zentralen Austrittsöffnung 160 für eine Schneidsauerstoffzufuhr. Auch hier kann diese zentrale Austrittsöffnung 160 für eine zusätzliche Zufuhr von Heizgas und -sauerstoff genutzt werden.

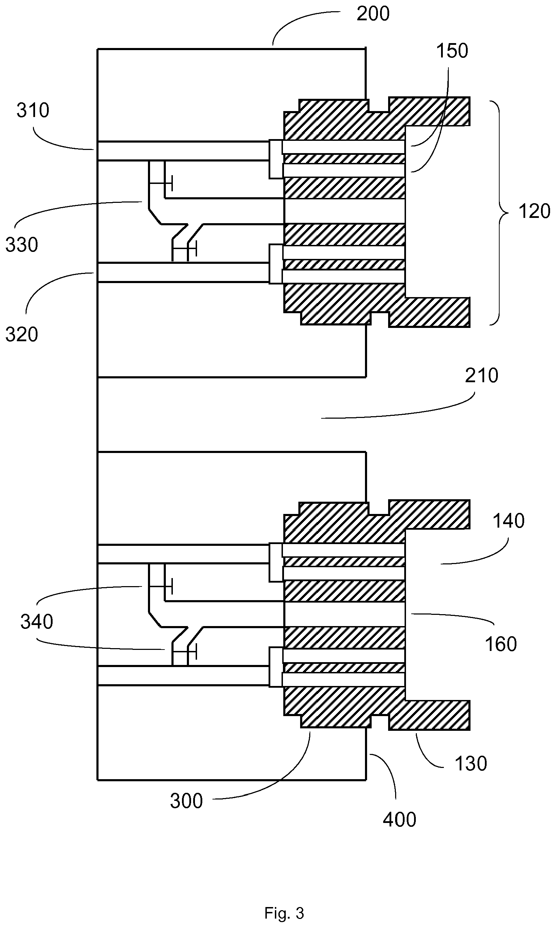

Fig. 3 zeigt einen Querschnitt durch einen solchen linearen Flämmkopf 200. In diesem Fall sind die Schneiddüsen 120 mittels eines Gewindes 300 so am Flämmkopf 200 fixiert, dass sie über dessen Brennerplatte 400 hinausragen. Der Sechskant 130 ist jeweils gut erreichbar. Zu sehen sind hier Zufuhren 310 und 320 für Heizgas bzw. Heizsauerstoff, die die Leitungen bzw. Bohrungen in der Schneiddüse versorgen, die über die Austrittsöffnungen 150 in den Topf 140 münden. Ferner sind Leitungen 330 vorgesehen, die über Ventile 340 die Schneidsauerstoffzufuhren 160 der Schneiddüsen 120 mit den Zufuhren 310 und 320 für Heizgas bzw. Heizsauerstoff verbinden, um bei Bedarf eine erhöhte Heizleistung zu erzielen.

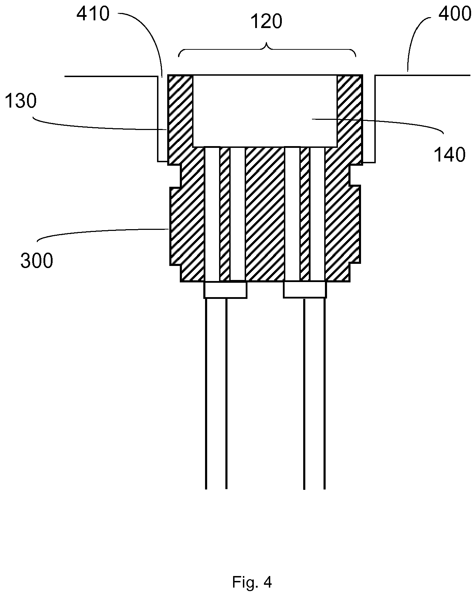

In Fig. 4 ist dargestellt, wie eine Schneiddüse 120 so in einem Flämmkopf montiert ist, dass sie mit der Brennerplatte 400 des Flämmkopfes fluchtet. Um den Sechskant 130 herum ist hierzu eine Aussparung 410 vorhanden, die so bemessen sein muss, dass das jeweilige Werkzeug hineingreifen kann, um die Schneiddüse mittels des Gewindes 300 hinein- bzw. herauszuschrauben. Alternativ kann die Aussparung minimiert werden, wenn die topfartige konkave Vertiefung 140 der Schneiddüse beispielsweise eine Innensechskantform aufweist.

### Glossar

### Brennerplatte

Dabei handelt es sich um eine ebene Oberfläche an der Gasaustrittsseite eines Gasbrenners, insbesondere eines Flämmkopfes. An der Brennerplatte sind die eigentlichen Gasaustrittsdüsen montiert.

### Schneiddüse

Eine Schneiddüse ist eine Gasführungsdüse, die zum Ausbilden einer Flamme für das Sauerstoff-Brennschneiden von durch Gießen hergestellten Werkstücken, insbesondere Brammen, verwendet wird. Eine Schneiddüse weist stets Gasführungen für Heizgase, häufig zusätzlich Heizsauerstoff, auf. Ferner stets mindestens eine Gasführung, in der Regel zentral, für Schneidsauerstoff, also Sauerstoff, der zum eigentlichen Brennschneiden des metallischen Werkstücks benötigt wird.

### Bezugszeichen

- 100: Flämmkopf, rund
- 110: zentrale Gasaustrittsöffnung
- 120: Schneiddüse
- 130: Sechskant
- 140: topfartige, konkave Vertiefung
- 150: Austrittsöffnung für Heizgas bzw. Heizsauerstoff
- 160: Austrittsöffnung für Schneidsauerstoff
- 200: Flämmkopf, linear
- 210: zentraler Gasaustrittsspalt
- 300: Gewinde
- 310: Heizgaszufuhr
- 320: Heizsauerstoffzufuhr
- 330: Leitung für Zusatzversorgung der Schneidsauerstoffbohrung
- 340: Ventil
- 400: Brennerplatte
- 410: Aussparung

### zitierte Literatur

### zitierte Patentliteratur

DE 20 2006 008 760 U1
WO 99/61192 A1
WO 2011/154043 A1
DE 16 29 960 A1

## Patentansprüche

1. Flämmkopf (100; 200) zum Flämmen einer Oberfläche eines durch Gießen hergestellten Werkstücks, insbesondere einer Bramme,
1.1 mit einer Gas-Austrittsseite mit einer Brennerplatte (400), wobei sich an der Gas-Austrittsseite eine Flamme zum Flämmen bilden kann;
1.2 mit einer Mehrzahl von Schneiddüsen (120), die an der Brennerplatte einzeln lösbar fixiert sind; und
1.3 mit einer zentralen Gas-Führung (110; 210) im Flämmkopf;
1.4 wobei die Mehrzahl von Schneiddüsen (120) um die zentrale Gas-Führung (110; 210) herum angeordnet sind;
1.5 wobei der Flämmkopf (100; 200) derart ausgebildet ist, dass durch die Mehrzahl von Schneiddüsen Heizgas (150; 310) und optional Heizsauerstoff (150; 320) austreten können; und
1.6 wobei der Flämmkopf (100; 200) ferner derart ausgebildet ist, dass durch die zentrale Gas-Führung (110; 210) Flämm-Sauerstoff austreten kann.

2. Flämmkopf nach dem vorhergehenden Anspruch,
**dadurch gekennzeichnet,**
**dass** die Schneiddüsen (120) an ihrer Gas-Austrittsseite eine konkave, topfartige Vertiefung (140) aufweisen, in welche Heizgas (150; 310) und/oder Heizsauerstoff (150; 320) austreten können.

3. Flämmkopf nach einem der vorhergehenden Ansprüche,
**dadurch gekennzeichnet,**
**dass** die Mehrzahl von Schneiddüsen (120) im fixierten Zustand austrittsseitig mit der Brennerplatte (400) des Flämmkopfes fluchten.

4. Flämmkopf nach Anspruch 1 oder 2,
**dadurch gekennzeichnet,**
**dass** die Mehrzahl von Schneiddüsen (120) im fixierten Zustand austrittsseitig über die Brennerplatte (400) des Flämmkopfes (100; 200) hinausragen.

5. Flämmkopf (100) nach einem der vorhergehenden Ansprüche,
**dadurch gekennzeichnet,**
**dass** die Mehrzahl von Schneiddüsen (120) konzentrisch um die zentrale Gas-Führung (110) herum angeordnet sind.

6. Flämmkopf (200) nach einem der Ansprüche 1 bis 4,
**dadurch gekennzeichnet,**
6.1 dass die zentrale Gas-Führung als Spalt (210) ausgebildet ist; und
6.2 dass die Mehrzahl von Schneiddüsen (120) parallel zur zentralen Gas-Führung und auf beiden Seiten der zentralen Gas-Führung angeordnet sind.

7. Flämmkopf (200) nach dem vorhergehenden Anspruch,
**dadurch gekennzeichnet,**
**dass** auf der in Flämmrichtung vorderen Seite der zentralen Gas-Führung (210) eine Gruppe von ein bis drei benachbarten Schneiddüsen (120) um 3-7 mm in Flämmrichtung verschoben angeordnet ist.

8. Verwendung des Flämmkopfes nach einem der Ansprüche 1 bis 7 zum Flämmen einer Oberfläche eines durch Gießen hergestellten Werkstücks, insbesondere einer Bramme.

9. Verfahren zum Flämmen einer Oberfläche eines durch Gießen hergestellten Werkstücks,
insbesondere einer Bramme,
**gekennzeichnet durch folgende Schritte:**
9.1 mit einem Flämmkopf nach einem der Ansprüche 1 bis 7 wird eine Kante des Werkstücks bis zur Zündtemperatur des Materials des Werkstücks aufgeheizt;
9.2 nach Erreichen der Zündtemperatur wird Flämm-Sauerstoff über die zentrale Gas-Führung auf das Werkstück geleitet und Flämmkopf und Werkstück werden in einer Richtung relativ zueinander bewegt.

10. Verfahren nach dem vorhergehenden Anspruch,
**dadurch gekennzeichnet,**
10.1 dass nach Erreichen eines Endes des Werkstücks während der Relativbewegung die Bewegung in entgegengesetzter Richtung fortgesetzt wird;
10.2 wobei während der Bewegung in entgegengesetzter Richtung kein Heizgas und kein Heizsauerstoff mehr aus dem Flämmkopf auf das Werkstück geleitet wird, sondern nur noch Flämm-Sauerstoff.

11. Verfahren nach einem der beiden vorhergehenden Ansprüche,
wobei die Schneiddüsen (120) mindestens eine Schneid-Sauerstoff-Bohrung (160) aufweisen,
**dadurch gekennzeichnet,**
**dass** während des Aufheizens des Werkstücks bis zur Zündtemperatur seines Materials kein Sauerstoff durch die mindestens eine Schneid-Sauerstoff-Bohrung (160) der Schneiddüsen (120) auf das Werkstück geleitet wird.

12. Verfahren nach einem der Ansprüche 9 bis 10,
wobei die Schneiddüsen (120) mindestens eine Schneid-Sauerstoff-Bohrung (160) aufweisen,
**dadurch gekennzeichnet,**
**dass** während des Aufheizens des Werkstücks bis zur Zündtemperatur seines Materials zusätzlich Heizgas und Heizsauerstoff durch die mindestens eine Schneid-Sauerstoff-Bohrung (160) mindestens einer der Schneiddüsen (120) auf das Werkstück geleitet wird.

## Claims

1. Scarfing head (100; 200) for scarfing a surface of a workpiece produced by casting, in particular a slab,
1.1 with a gas outlet side with a burner plate (400), wherein a flame for scarfing can form at the gas outlet side;
1.2 with a plurality of cutting nozzles (120), which are individually removably fixed to the burner plate; and
1.3 with a central gas conduit (110; 210) in the scarfing head;
1.4 wherein the plurality of cutting nozzles (120) are arranged around the central gas conduit (110; 210);
1.5 wherein the scarfing head (100; 200) is so configured that heating gas (150; 310) and optionally heating oxygen (150; 320) can exit through the plurality of cutting nozzles; and
1.6 wherein the scarfing head (100; 200) is further so configured that scarfing oxygen can exit through the central gas conduit (110; 210).

2. Scarfing head according to the preceding claim,
**characterized in that**
the cutting nozzles (120) comprise a concave, cup-like recess (140) at their gas outlet side, into which heating gas (150; 310) and/or heating oxygen (150; 320) can exit.

3. Scarfing head according to any one of the preceding claims,
**characterized in that**
the outlet sides of the plurality of cutting nozzles (120) are aligned with the burner plate (400) of the scarfing head in the fixed state.

4. Scarfing head according to claim 1 or 2,
**characterized in that**
the outlet sides of the plurality of cutting nozzles (120) protrude from the burner plate (400) of the scarfing head (100; 200) in the fixed state.

5. Scarfing head (100) according to any one of the preceding claims,
**characterized in that**
the plurality of cutting nozzles (120) are arranged concentrically around the central gas conduit (110).

6. Scarfing head (200) according to any one of the claims 1 to 4,
**characterized in that**
6.1 the central gas conduit is formed as a gap (210); and
6.2 the plurality of cutting nozzles (120) are arranged parallel to and on both sides of the central gas conduit.

7. Scarfing head (200) according to the preceding claim,
**characterized in that**
a group of one to three adjacent cutting nozzles (120) located on the front side in the scarfing direction of the central gas conduit (210) is displaced by 3-7 mm in the scarfing direction.

8. Use of a scarfing head according to one of the claims 1 to 7 for scarfing a surface of a workpiece produced by casting, in particular a slab.

9. Method for scarfing a surface of a workpiece produced by casting, in particular a slab,
**characterized by the following steps:**
9.1 an edge of the workpiece is heated to the ignition temperature of the material of the workpiece with a scarfing head according to one of the claims 1 to 7;
9.2 after reaching the ignition temperature, scarfing oxygen is directed at the workpiece via the central gas conduit, and the scarfing head and workpiece are moved in a direction relative to one another.

10. Method according to the preceding claim,
**characterized in that,**
10.1 after reaching an end of the workpiece during the relative movement, the movement is continued in the opposite direction;
10.2 wherein, during the movement in the opposite direction, heating gas and heating oxygen are no longer directed at the workpiece from the scarfing head, but only scarfing oxygen.

11. Method according to one of the two preceding claims,
wherein the cutting nozzles (120) comprise at least one cutting oxygen bore (160),
**characterized in that,**
during the heating of the workpiece to the ignition temperature of its material, no oxygen is directed at the workpiece through the at least one cutting oxygen bore (160) of the cutting nozzle (120).

12. Method according to any one of claims 9 to 10,
wherein the cutting nozzles (120) comprise at least one cutting oxygen bore (160),
**characterized in that**
additional heating gas and heating oxygen is directed at the workpiece through the at least one cutting oxygen bore (160) of at least one of the cutting nozzles (120) during the heating of the workpiece to the ignition temperature of its material.

## Revendications

1. Tête de chalumeau (100 ; 200) destinée à décriquer au chalumeau une surface d'une pièce obtenue par coulée, en particulier une brame,
1.1. comprenant un côté sortie de gaz doté d'une plaque de brûleur (400), une flamme pouvant se former sur le côté sortie de gaz pour décriquer au chalumeau ;
1.2. comprenant une pluralités de buses de coupe (120) qui sont fixées amovibles sur la plaque de brûleur ; et
1.3. comprenant un élément central de guidage de gaz (110; 210) dans la tête de chalumeau ;
1.4. la pluralité des buses de coupe (120) étant disposées autour de l'élément central de guidage de gaz (110; 210) ;
1.5. la tête de chalumeau (100 ; 200) étant formée de manière que, par la pluralité des buses de coupe puissent sortir du gaz de chauffe (150 ; 310) et éventuellement de l'oxygène de chauffe (150 ; 320) ; et
1.6. la tête de chalumeau (100 ; 200) étant en outre formée de manière que, par l'élément central de guidage de gaz (110 ; 210) puisse sortir de l'oxygène pour le décriquage.

2. Tête de chalumeau selon la revendication précédente,
**caractérisée en ce que**
les buses de coupe (120) sur leur côté sortie de gaz présentent un creux concave en forme de pot (140) dans lequel peuvent sortir le gaz de chauffe (150 ; 310) et/ou l'oxygène de chauffe (150 ; 320).

3. Tête de chalumeau selon l'une des revendications précédentes,
**caractérisée en ce que**
la pluralité de buses de coupe (120) dans un état fixe côté sortie sont alignées avec la plaque de brûleur (400) de la tête de chalumeau.

4. Tête de chalumeau selon la revendication 1 ou 2,
**caractérisée en ce que**
la pluralité de buses de coupe (120) dans un état fixe côté sortie font saillie de la plaque de brûleur (400) de la tête de chalumeau (100 ; 200).

5. Tête de chalumeau (100) selon l'une des revendications précédentes,
**caractérisée en ce que**
la pluralité des buses de coupe (120) sont disposées de manière concentrique autour de l'élément central de guidage de gaz (110).

6. Tête de chalumeau (200) selon l'une des revendications 1 à 4,
**caractérisée en ce que**
6.1. l'élément central de guidage de gaz se présente sous la forme d'une fente (210) ; et
6.2. **en ce que** la pluralité de buses de coupe (120) sont disposées parallèlement à l'élément central de guidage de gaz et de chaque côté de l'élément de guidage de gaz.

7. Tête de chalumeau (200) selon la revendication précédente,
**caractérisée en ce que**
sur le côté avant de l'élément central de guidage de gaz (210) en direction du chalumeau, un groupe d'une à trois buses de coupe adjacentes (120) sont montées décalées de 3-7 mm dans la direction du chalumeau.

8. Utilisation de la tête de chalumeau selon une des revendications 1 à 7 pour décriquer au chalumeau une surface d'une pièce obtenue par coulée, en particulier une brame.

9. Procédé de décriquage au chalumeau une surface d'une pièce obtenue par coulée, en
particulier une brame,
**caractérisé par les étapes suivantes:**
9.1. au moyen d'une tête de chalumeau selon une des revendications 1 à 7, chauffer un bord de la pièce jusqu'à température d'ignition du matériau de la pièce ;
9.2. une fois la température d'ignition atteinte, amener l'oxygène pour le décriquage au moyen de l'élément central de guidage de gaz sur la pièce et déplacer la tête de chalumeau et la pièce l'une par rapport à l'autre dans une direction.

10. Procédé selon la revendication précédente,
**caractérisé en ce que**
10.1. une fois une extrémité de la pièce atteinte pendant le mouvement relatif, poursuivre le mouvement dans la direction opposée ;
10.2. pendant le mouvement dans la direction opposée il n'y a plus de gaz de chauffe ni d'oxygène de chauffe provenant de la tête de chalumeau amené sur la pièce, mais seulement de l'oxygène pour le décriquage.

11. Procédé selon une des deux revendications précédentes,
les buses de coupe (120) présentant au moins un trou (160) d'oxygène de coupe,
**caractérisé en ce que**
pendant le chauffage de la pièce jusqu'à ce que la température d'ignition de son matériau soit atteinte, il n'y pas d'oxygène qui est amené par le trou (160) d'oxygène de coupe des buses de coupe (120) sur la pièce.

12. Procédé selon une des revendications 9 à 10,
les buses de coupe (120) présentant au moins un trou (160) d'oxygène de coupe,
**caractérisé en ce que**
pendant le chauffage de la pièce jusqu'à ce que la température d'ignition de son matériau soit atteinte, du gaz de chauffe et de l'oxygène de chauffe supplémentaires sont amenés par l'au moins un trou (160) d'oxygène de coupe d'au moins une des buses de coupe (120) sur la pièce.
